# EUROPEAN PATENT APPLICATION

(11) **EP 1 187 433 A2**
(43) Date of publication of application: **13.03.2002**
(21) Application number: 01118377.9
(22) Date of filing: 27.07.2001
(51) Int. Cl.: H04M 1/2745, H04M 1/725

(54) **Method of inputting an address book into a mobile communication terminal**

(30) Priority: 07.09.2000 KR 2000053213
(71) Applicant: SAMSUNG ELECTRONICS CO., LTD., Suwon-City, Kyungki-do (KR)
(72) Inventor: Lee, Soo-Ick, c/o Samsung Electronics Co.,Ltd., Suwon-city, Kyungki-do (KR)
(74) Representative: Grünecker, Kinkeldey, Stockmair & Schwanhäusser Anwaltssozietät

(57) **Abstract**

A method of inputting an address book into a mobile communication terminal including the steps of inputting, from the mobile communication terminal, an address book service number including a characteristic number allocated to a client who wants address book information to be provided, to an address book management center to supply and request the address book information; transmitting the address book service number to the address book management center; receiving the address book service number at the address book management center; searching in the address book management center for the address book information corresponding to the characteristic number; transmitting the retrieved address book information to the mobile communication terminal; and storing in the mobile communication terminal the received address book information.

## Description

The present invention relates to a method of inputting an address book into a mobile communication terminal, and more particularly, to a method utilizing a supplementary service.

A mobile terminal, that is easily portable, unlike the previous stationary telephone terminals, provides essential functions to a user such as an address book. The address book includes a number of items, including a telephone number, an Internet address, etc. Address books in prior art terminals are not separately managed while being stored in the terminal, but can be viewed as necessary.

Presently, the main method of inputting information into an address book requires a user to input information, by using a keypad, into a terminal. Therefore, the user must directly hear the address table information or read a name card or a pamphlet prior to inputting the information into the terminal. Therefore, the user should input only the most essential information into the mobile terminal. However, such an input requires some complicated manipulation, which is inconvenient to the user.

Also, the amount of information associated with a telephone number, an Internet home page address, an e-mail address, etc. is gradually increasing. The user is thus inconvenienced by the amount of information he must put into the terminal, since such information cannot be conveniently inputted, according to the present methods.

Furthermore, at the present time, where Internet businesses and tele-marketing businesses are rapidly developing and expanding, there is a need for companies to widely publicize their information to consumers easily and rapidly. Therefore, a need exists for an apparatus and a method that allows a user to easily input information in an address book of a mobile communication terminal. Further, there is also a need for an apparatus and a method that allows companies to easily advertise products to consumers over a mobile terminal.

It is, therefore, the object of the present invention to provide a convenient method of inputting information into an address book of a mobile terminal.

According to an aspect of the invention, there is provided a method of inputting information into an address book of a mobile terminal that allows various kinds of address information to be inputted rapidly.

According to another aspect of the invention, there is provided a method of inputting information into an address book of a mobile terminal that can be utilized as an advertising tool for companies.

To obtain the foregoing object of the invention, there is provided a method of inputting information into an address book of a mobile communication terminal, the method comprising: inputting, from the mobile communication terminal, an address book service number including a characteristic number allocated to a client who wants address book information to be provided; transmitting the address book service number to an address book management center to request the address book information; receiving the address book service number at the management center; searching in the address book management center to retrieve address book information corresponding to the characteristic number; transmitting the retrieved address book information to the mobile communication terminal; storing in the mobile communication terminal the address book information; and alerting the client that the address book information has arrived at the mobile communication terminal, wherein the client can access the address book information.

The above object, features and advantages of the present invention will become more apparent from the following detailed description when taken in conjunction with the accompanying drawings in which:
FIG. 1 is a block diagram of a mobile communication terminal, according to the present invention;
FIG. 2 is a structural view of a mobile communication system in which a mobile communication terminal and an address book management center are linked, according to an embodiment of the present invention;
FIG. 3 is a flow chart of the processing of a message between the mobile communication terminal and the address book management center, according to the embodiment of the present invention; and
FIG. 4 is an operational flow chart of a control unit of the mobile communication terminal for showing a process of storing a received address book message, according to the embodiment of the present invention.

Hereinafter, preferred embodiments of the invention will be described in detail with reference to the appended drawings. Like components are referred to by like reference numerals or characters in the drawings. Also, detailed description of known functions or structures that may unnecessarily obscure the substance of the invention have been omitted.

In order to overcome a previous inconvenient input process, the present invention utilizes a remote service in which a mobile communication terminal utilizes a separate telephone number to connect to an address book at a sending terminal, when a call is made to the separate telephone number. The separate telephone number hereinafter will be referred to as an address book service number. When a mobile terminal originates a call by inputting the address book service number, the address book service number contacts a company that provides information about the address book, (hereinafter will be referred to as an address book management center) then transmits address book information to the mobile terminal, which adds the address book information into an address book menu upon receiving the information.

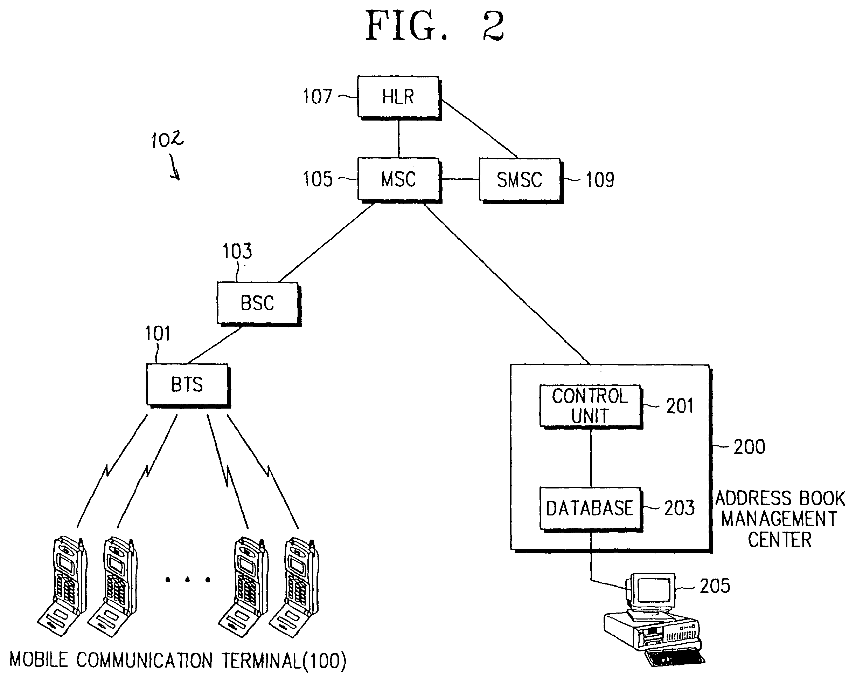

According to an embodiment of the present invention, the address book service number is composed of a number from the address book management center and a characteristic number designated to each individual or company who wants the address book to be supplied (hereinafter will be referred to as a supply client). For example, an address book service number may be 999-1234, where 999 is the number of the address book management center and 1234 is the characteristic number designated to each supply client. Referring to FIG. 2, a link is formed between the address book management center 200 and the mobile terminal 100 when the user inputs the number 999 and the number 1234. These numbers are used to discriminate between the address books stored in a database of the address book management center or the mobile communication terminal 100, and to search for a corresponding address book in the address book management center 200. Each telephone number information has a characteristic number in the address book management system. These characteristic numbers are used together with the discriminating number of the address book management system, thereby obtaining one telephone number. That is, the user dials the obtained number so as to receive the telephone number information. This number is composed of two parts: a head part and a tail part. The head part is the discriminating number of the address book management system and the tail part is the characteristic number of the information associated with the particular telephone number. The information associated with the particular telephone number may be the name, telephone number, fax number and email address. Accordingly, the address book management system transmits information associated with the corresponding telephone number pursuant to the tail part of the called telephone number, to the calling mobile terminal by using a Caller ID number through a Short Message Service (SMS).

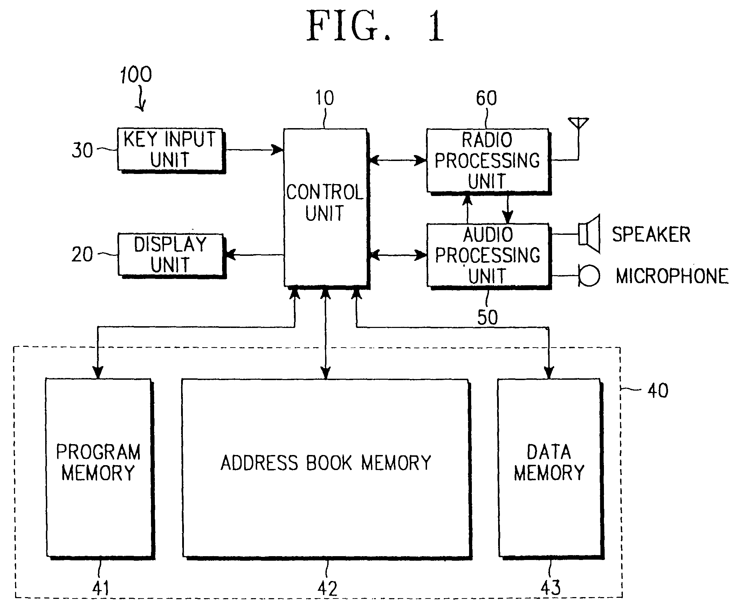

The structure of a mobile communication terminal 100, according to the invention will be described with reference to FIG. 1, which is a block diagram of the mobile communication terminal. Mobile communication terminal 100 is comprised of a control unit 10, a display unit 20, a key input 30, a storage unit 40, an audio processing unit 50 and a radio processing unit 60. Those of ordinary skill in the art recognize that a mobile communication terminal may include more elements than those recited above.

Control unit 10 controls the overall operation of the mobile terminal 100. Radio processing unit 60 transceives audio data and control data, under the control of the control unit 10. Audio processing unit 50 outputs the audio data from the radio processing unit 60 after converting it into audible sound via a speaker, then outputs an audio signal received via a microphone to the radio processing unit after processing the signal into data. Key input unit 30 includes a plurality of number keys and function keys, then outputs key input data corresponding to a key pressed by a user utilizing the control unit 10. Display unit 20, under the control of the control unit 10, displays various messages. Storage unit 40 includes a program memory 41, an address book memory 42 and a data memory 43. Program memory 41 stores program data necessary to control the operation of the mobile terminal and other program data about an address book menu added, according to the embodiment of the invention. Data memory 43 stores data generated during the control or operation by the user. Also, the storage unit 40 includes an address book memory 42 for storing the address book. The address book memory 42 is comprised of a first area for storing an input of an address book, according to a previous method, and a second area for storing a general address book transmitted from the address book management center 200.

The general address book is a package that contains an e-mail address, fax number, etc. together with the telephone number arranged in a certain order. Contents and arrangement order of the general address book, according to the embodiment of the present invention, are shown in Table 1.

**Table 1**

| Name/Characteristic Number | Order | Stored Data |
|---|---|---|
| | 1 | 02-100-1000 |
| | 2 | 014-200-2000 |
| | 3 | FAX.300-3000 |
| | 4 | hoon11@hoon.co.kr |
| | 5 | www.HOON.co.kr |
| | 6 | Other Information |

As can be seen in Table 1, the general address book is arranged in the order of a telephone number, a mobile communication terminal number, a fax number, an e-mail address, a home page address, and other information which may include a representative's name, a characteristic number of the supply client, etc. Those of ordinary skill in the art recognize that the information in the general address book may be arranged in any format, which may be different from the format recited above. For example the fax number may be located on order line 1 and the e-mail address may be located on order line 2.

The address book management center 200 transmits the address book information in the form of a short message to the mobile communication terminal 100 together with a special code (as a special short message) to discriminate the information from common short messages. Also, an advertisement can be transmitted together with the general address book and in this way the supply client can effectively display the advertisement.

The general address book is stored in the mobile terminal as it is. In other words, since the address book information is stored in the mobile communication terminal, according to a certain order, a search can be performed, according to the kind of information, included in the general address book such as e-mail address, telephone number, etc. This can be realized by an address book menu added according to the embodiment of the invention. The address book menu is utilized for managing and searching the general address book and generally inputted address books. The address book menu includes 'name search', 'address search', 'telephone number', 'mobile communication terminal number', 'fax number', 'e-mail address', 'home page address' and the like. In the 'name search' and 'address search' portion of the address book menu, an address book list is searched according to name, representative name or address and then all contents of the searched general address menu are displayed. Other menus associated with the address book menu may be searched and there may be a display of pertinent information respectively.

At the request of the mobile communication terminal 100, the address book management center 200 transmits an address book message containing the address book information via the mobile communication system and the short message service.

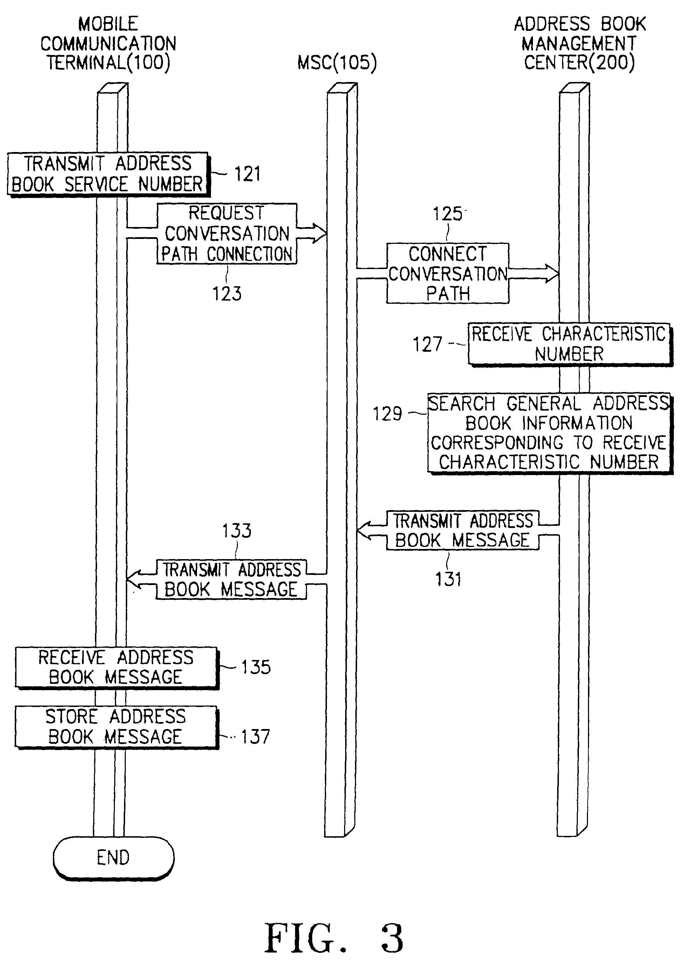

A schematic structure of a mobile communication system 102, according to the present invention, and a message treatment process between a mobile communication terminal 100 and an address book management center 200 are shown in FIG. 2 and FIG. 3. A process for transmitting an address book message, according to an embodiment of the invention, will be described in detail in reference to FIG. 2 and FIG. 3.

FIG. 2 is a structural view of the mobile communication system 102 in which the mobile communication terminal 100 and an address book management center 200 are linked, according to the embodiment of the present invention. A BTS (Base Transceiver Station) 101 shown in FIG. 2 communicates with a mobile communication terminal 100 by using a radio link. A BSC (Base Station Controller) 103 controls radio and line links, and performs a handoff for maintaining a continuance of a conversation, even though the user is moving. An MSC (Mobile Switching Center) 105 performs a network link with other MSCs for transmitting/receiving a request from the mobile communication terminal 100, and performs inquiries of an HLR (Home Location Register) 107 about the user or subscriber. Also, when the short message is transmitted from an SMSC (Short Message Service Center) 109, the short message is sent to the BSC 103 so that the short message can be transmitted via a paging channel in the BTS 101. A message reception, from the BTS 101 to the BSC 103, is performed in the same manner but in the opposite direction as above. The HLR 107 is a minicomputer for mainly performing functions of a subscriber information processing unit, and is mainly divided into components such as a network access unit, a subscriber database, an operation-management unit, etc. The SMSC 109 is an independent node and includes a function for locating a receiver and sending the short message to the mobile subscribers, that connects it with the HLR 107 and the MSC 105.

An address book management center 200 is connected to the MSC 105 and transmits the general address book requested from the mobile communication terminal 100 in the form of a short message. The address book management center 200 is comprised of a control unit 201 and a database 203. Control unit 201 of the address book management center 200 controls overall operations of the address book management center 200, and searches the requested general address book in a database 203 of the address book management center 200 in order to transmit the restricted data to the mobile terminal 100 which requested the search. An operator of the address book management center 200 receives address book information request from a company or an individual, which wants information to be provided, then inputs and manages the address book information in the database 203 via an operator terminal 205.

The treatment process of the address book message including the general address book is described in reference to FIG. 2 and FIG. 3. FIG. 3 is a flow chart of the processing of the message between the mobile communication terminal and the address book management center, according to the embodiment of the present invention.

In step 121, the mobile communication terminal 100 originates a call to the address book management center 200, by inputting an address book service number into the mobile communication terminal 100. The mobile communication terminal 100 may input the address book service number by the user physically pressing keys on the key input 30 of the mobile communication terminal 100, by the user speaking into the speaker of audio processing unit 50 of the mobile communication terminal 100 in order to dial the address book service number, or utilize any other means to input information into the mobile communication terminal 100 that may be utilized by those of ordinary skill in the art. In step 123, the mobile communication terminal 100 requests a conversation path connection with the address management center 200 to the MSC 105 via the BTS 101 and the BSC 103. In step 125, the MSC 105 requests confirmation of a subscriber registration of the mobile communication terminal 100 to the HLR 107, then connects the conversation path with the address management center 200, if the subscriber registration is confirmed. When the conversation path is connected, the control unit 201 of the address management center 200 receives the characteristic number of the address book service number in step 127. Then in step 129, the control unit 201 performs a search of the general address book, corresponding to the characteristic number received in the database 203 of the address book management center 200, and then the process proceeds to step 131. In step 131, the control unit 201 transmits the address book message (information) including the retrieved general address book, an advertisement, etc. in the form of a short message to the MSC 105. In step 133, the MSC 105 transmits the transmitted address book message to the mobile communication terminal 100 via the SMSC 109. Then in step 135, the mobile communication terminal 100 receives the address book message, then the process proceeds to step 137. In step 137, the mobile communication terminal 100 stores the received address book message and then ends the process. Also, in step 137, after the mobile communication terminal 100 receives the address book message, an alarm signal or an audio signal in the communication terminal 100 is activated to indicate that the address book message has been received. If the address book message has a particular code indicate receipt of the address book, then the address book is stored in the communication terminal 100. This address book information pertaining to the address book message having the particular code may be detected, searched and/or deleted by communication terminal 100.

In performing the foregoing process, the supply client pays a charge according to the conversation call connection and address book message transmission, and an accounting center of the MSC 105 imposes the charge. Herein, it is necessary for the supply client to pay the charges if the general process is utilized, because when a mobile terminal originates a call by sending the call to the address book management center, the address book management center reads the Caller ID and detects the user's telephone number although the address book management center does not receive the call. The address book management center sends the SMS to the mobile terminal having the obtained telephone number. According to the invention, the supply client pays only the charge for maintaining the telephone line and receiving the SMS. Therefore, the supply client doesn't pay the charge, according to the conversation call connection, if the supply client does not connect with the address book management center.

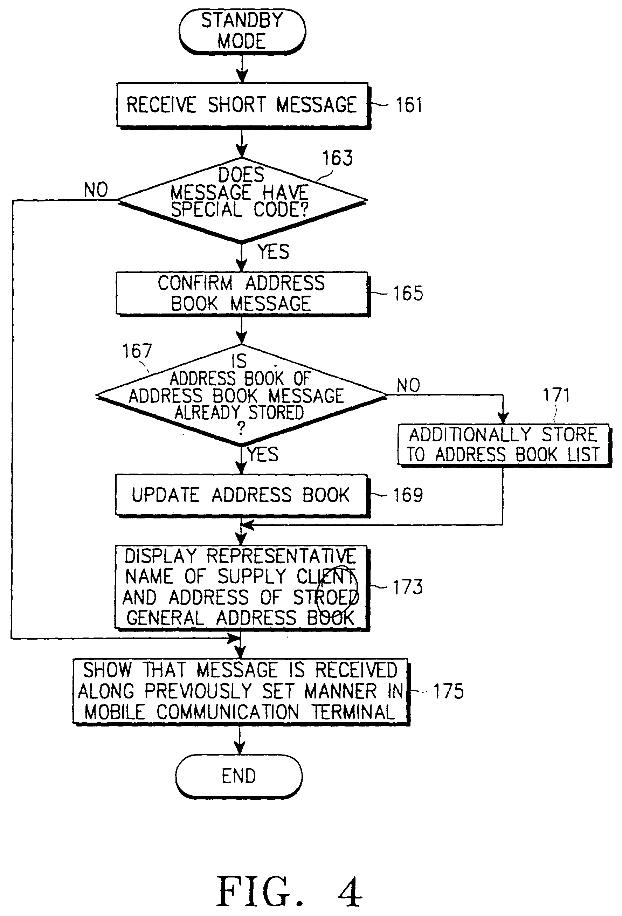

A process of receiving and storing the address book message by the mobile communication terminal 100 will be described in detail in reference to FIG. 4, which is an operational flow chart of the control unit of the mobile communication terminal for showing a process of storing the received address book message according to the embodiment of the present invention.

The control unit 10 of the mobile communication terminal 100 receives the short message in step 161 then proceeds to step 163. In step 163, the control unit 10 determines, if the received short message includes a special code. The control unit 10 proceeds to step 165 if the message has the special code, or proceeds to step 175, if the message does not have the special code. In the embodiment of the present invention, since the address book message is automatically stored in the address book memory without any additional external input after received in the mobile communication terminal, a specified code is discriminated from other short messages and given to the address book management center 200.

In step 165, the control unit 10 confirms if the short message is the address book message then proceeds to step 167. In step 167, the control unit 10 inspects the address book list to check if the address book was previously stored as a general address book via the characteristic number included in the address book message. The control unit 10 proceeds to step 169 if the address book is the stored general address book, or proceeds to step 171 if the address book is not the stored general address book to store the received address book. In step 169, the control unit 10 updates the stored general address book with the general address book received in step 161 and then proceeds to step 173. In addition, the control unit 10 stores the general address book received in step 161 to the address book list then proceeds to step 173. In step 173, the control unit 10 displays the representative name of the supply client and the stored address of the stored general address book. Then in step 175, the control unit 10 shows that the short message is received along a previously set manner in the mobile communication terminal 100, then ends the process.

In the case of necessity, a password is used to prevent any appropriation of the address book information. When the address book service number is utilized to connect the mobile communication terminal 100 to the address book management center 200, the address book management center 200 searches for the general address book in the general book list corresponding to the characteristic number and prepares for transmission of the address book message to the communication terminal 100. Next, the address book management center 200 transmits a guidance message to report that the transmission is ready and together with a second guidance message to request a password input from the mobile communication terminal 100. Then, the address book management center 200 starts to transmit the address message, if the password is received from the mobile communication terminal 100.

The address book management center 200 can transmit the guidance message, about the general address book, to any mobile communication terminal 100 that received the address book message, from the address book management center 200, without a request for the address book message from the mobile communication terminal 100. The address book management center 200 stores numbers of the mobile communication terminals 100 which request transmission of the address book message in association with corresponding general address book lists in the database 203, then transmits changed information about the corresponding general address book list, advertisements, etc.

As above, the present invention provides the method of address book input using the short message service so that the address book can be conveniently inputted into the mobile communication terminal. Also, various kinds of address book information can be inputted rapidly. The company or individual that utilizes the general address book can be conveniently provided with the address book information. Furthermore, in providing the address book, an advertisement of the company or individual can be provided at the same time, so that a high advertisement effect can be obtained.

While the embodiment of the invention has been described in the foregoing detailed description, a number of variations can be made without departing the scope of the invention. For example, a configuration can be made so that the mobile communication terminal can request a number of address book messages by inputting a number of characteristic numbers and receive the messages after being connected with the address book management center. Also, it can be configured so that the mobile communication terminal can selectively store the received address book messages, which were requested.

## Claims

1. A method of inputting an address book into a mobile communication terminal, the method comprising:
inputting in the mobile communication terminal an address book service number including a characteristic number allocated to a client who wants address book information to be provided to an address book management center to supply a request for the address book information ;
receiving the requested address book information from the address book management center; and
storing the address book information in the mobile communication terminal.

2. The method of claim 1, further comprising the steps of:
transmitting the address book service number to the address book management center;
receiving the address book service number at the address book management center;
searching in the address book management center to retrieve the address book information corresponding to the characteristic number; and
transmitting the retrieved address book information to the mobile communication terminal.

3. The method of claim 2 wherein the address book management center transmits the address book information corresponding to the characteristic number in short message form to the mobile communication terminal.

4. The method of claim 3, wherein the step of storing in the mobile communication terminal the received address book information further comprises:
confirming if the received short message is a special short message about the address book information; and
automatically storing the special short message about the address book information.

5. The method of claim 4, wherein the step of storing in the mobile communication terminal the received address book information further comprises updating the stored address book information, if the short message about the address book information is a short message about previously stored address book information.

6. The method of one of the claims 1 to 5, further comprising transmitting from the address book management center the changed address book information to the mobile communication terminal, if there is changed information in the address book information.

7. The method of one of the claims 1 to 6, wherein the address book management center searches for the address book information corresponding to the characteristic number to transmit the retrieved information to the mobile communication terminal in combination with an advertisement.

8. The method of claim 1, further comprising :
transmitting, from the mobile communication terminal, the characteristic number to the address book management center;
searching in the address book management center for the address book information corresponding to the characteristic number to retrieve and transmit the searched address book information to the mobile communication terminal.

9. The method of claim 8, further comprising, if a password is set in the address book information requested from the mobile communication terminal, the step of confirming in the address book management center if the password is transmitted from the mobile communication terminal.

10. The method of claim 9, wherein the step of storing in the mobile communication terminal the received address book information further comprises:
confirming if a received short message is a special short message about the address book information; and
automatically storing the special short message about the address book information.

11. The method of claim 1, wherein the address book information is updated and stored, if the address book information is previously stored.

12. A system for inputting an address book into a mobile communication terminal, the system comprising;
a mobile communication terminal in communication with a mobile switching center;
a home location register in communication with the mobile switching center; and
an address book management center in communication with the mobile switching center.

13. The system of claim 12, wherein the address book management center is comprised of a control unit and a database.

14. The system of claim 12 or 13, wherein the address book management center receives a request for information from the mobile switching center.
